# EUROPEAN PATENT APPLICATION

(11) **EP 1 850 610 A1**
(43) Date of publication of application: **31.10.2007**
(21) Application number: 06713858.6
(22) Date of filing: 16.02.2006
(51) Int. Cl.: H04Q 7/36, H04B 1/707, H04J 11/00

(54) **MULTI-BAND RADIO COMMUNICATION METHOD AND BASE STATION**

(30) Priority: 18.02.2005 JP 2005042353
(71) Applicant: MITSUBISHI DENKI KABUSHIKI KAISHA, Chiyoda-ku, Tokyo 100-8310 (JP)
(72) Inventor: OCHIAI, Mari, uchi 2-chome, Chiyoda-ku, Tokyo, 1008310 (JP); TAIRA, Akinori, uchi 2-chome, Chiyoda-ku, Tokyo, 1008310 (JP); HARA, Yoshitaka, uchi 2-chome, Chiyoda-ku, Tokyo, 1008310 (JP)
(74) Representative: Zech, Stefan Markus
(86) International application number: PCT/JP2006/302717
(87) International publication number: WO 2006/088082

(57) **Abstract**

In a radio communication system that simultaneously provides communication service using a plurality of discontinuous frequency bands, a multi-band radio communication method according to the present invention is a method in which a base station constituting the system allocates a band to a mobile station that requests a communication starting. For example, a specific receiving unit within the base station extracts control information concerning a channel state in each of the frequency bands, and recognizes a frequency band in which the mobile station can receive information, from a result of the extraction. A channel controller 9 determines, starting from a high frequency band, whether a new traffic responding to the communication starting request can be allocated in each frequency band.

## Description

### TECHNICAL FIELD

The present invention relates to a multi-band radio communication method for simultaneously providing communication services through a plurality of frequency bands, and more particularly, to a multi-band radio communication method for preferentially allocating a high-frequency band to a mobile station.

### BACKGROUND ART

At present, researches of efficient high-speed radio transmission are actively performed, in the background of high expectation for future-generation high-speed radio transmission. In considering a communication system as business, consumers are conscious about a service area of the system as well as its transmission speed. Consumers are not interested in purchasing a system having many connection errors, even the system's connection is performed at a high speed. This is recognized from a relationship between population coverage and a subscriber increase in businesses in the past. In this sense, maintaining high service coverage is an important condition in future generation.

However, high-speed transmission is contradictory to a service area in many aspects. Generally, while a wave reaches farther in a lower frequency and communication can be performed easily on a Non-Line-of-Sight (NLOS) path in the low frequency, many low frequencies are already used in existing businesses including PDC. Because high-speed transmission requires a broad band, allocation of a low frequency is severe, and use of a high-frequency band having room is unavoidable. However, because of a physical constraint, when a high frequency is used, sufficient communication cannot be performed on NLOS propagation channels. Specifically, in the frequency of 3 gigahertz or above, there is a risk that a wave does not sufficiently reach indoors from outdoors, and consumers do not easily accept a reduction of service coverage.

A method of solving the problem of service coverage within one system has not been shown so far. At present, a method of replenishing a service area by handing over a network between a plurality of systems (corresponding to what is called a duel-mode terminal) is considered. However, there are complex problems such as charges from a provider, delay and control load of network handovers, and a problem that a user needs to purchase various kinds of system.

In the future radio communication, there is a possibility that allocated frequency bands are dispersed to a plurality of bands, from the relationship with the existing service. Depending on situations, there arises need to reorganize frequency bands to be allocated to services at the initiative of the government. Therefore, a radio communication system capable of responding to the situation has been desired.

There are also technologies that involve the use of a plurality of bands partly. For example, Patent Document 1 mentioned below has proposed "radio communication apparatus, radio communication system, and channel allocation method" that enables transmission and reception in a plurality of bands, where part of communication parameters is shared, by changing only a carrier frequency. However, these technologies do not suggest management of traffics in a plurality of bands.

Patent Document 1: Japanese Patent Application Laid-open No. 2003-101506

### DISCLOSURE OF INVENTION

### PROBLEM TO BE SOLVED BY THE INVENTION

As described above, future-generation communication systems require both high-speed communication (= broadband communication) and high service coverage. Although low-frequency bands can achieve broad service coverage, they are too congested to provide high-speed communication to unspecified large number of users. There is room for securing broadband in the 3 gigahertz or higher frequencies. However, when frequency becomes higher, problems of shadowing and distance attenuation become larger, and increasing the service coverage becomes difficult.

The present invention has been achieved in view of the above problems, and an object of the invention is to provide a multi-band radio communication method capable of increasing service coverage while securing bands in which unspecified large number of users can perform high-speed communication.

### MEANS FOR SOLVING PROBLEM

To overcome the problems and achieve the object mentioned above, a multi-band radio communication method for a base station that allocates a frequency band to a mobile station which requests initiation of communication, the base station constituting a radio communication system that simultaneously provides communication services through a plurality of discontinuous frequency bands, includes a control-information extracting step of extracting control information concerning a channel state in each of the frequency bands, and identifying a frequency band available for the mobile station based on a result of the extraction, and an allocation determining step of determining whether each of the frequency bands can be allocated to new traffic corresponding to the request for initiation of communication in a predetermined order.

According to the present invention, a channel controller in a base station checks, from a high frequency, whether each frequency band can be allocated to a new user. When each frequency band can be allocated to a new user, a frequency to be allocated to a mobile station is determined. In this way, the highest frequency band that is available for a new user would be allocated. On the other hand, when none of frequencies can be allocated to a new user, allocation process is not performed.

### EFFECT OF THE INVENTION

According to the present invention, a high-frequency band capable of accommodating a large number of users can be preferentially allocated to users, and a high-speed and wide service area can be realized in the entire communication system.

### BRIEF DESCRIPTION OF DRAWINGS

[Fig. 1] Fig. 1 is an example of a network configuration using a multi-mode terminal according to the present invention.
[Fig. 2] Fig. 2 is a schematic diagram of a conventional network configuration.
[Fig. 3] Fig. 3 is an example of a network configuration using a multi-mode terminal according to the present invention.
[Fig. 4-1] Fig. 4-1 depicts a service image according to a first embodiment.
[Fig. 4-2] Fig. 4-2 depicts a relationship between frequencies of frequency bands f₁ and f₂ to be used.
[Fig. 5] Fig. 5 is a configuration example of a base station using an OFDM communication system.
[Fig. 6] Fig. 6 is a flowchart of an example of frequency band allocation performed by a channel controller.
[Fig. 7] Fig. 7 is a flowchart of another example of frequency band allocation performed by the channel controller.
[Fig. 8-1] Fig. 8-1 is an example of a frame configuration that can be used in a multi-band radio communication method according to the present invention.
[Fig. 8-2] Fig. 8-2 is a configuration example of a base station that realizes the configuration of the frame.
[Fig. 9] Fig. 9 is a schematic diagram for explaining an example of transmission timing of notification information.
[Fig. 10] Fig. 10 is a schematic diagram for explaining another example of transmission timing of notification information.
[Fig. 11] Fig. 11 is a schematic diagram for explaining still another example of transmission timing of notification information.
[Fig. 12] Fig. 12 is a schematic diagram for explaining still another example of transmission timing of notification information.
[Fig. 13] Fig. 13 is a flowchart of an example of the operation of a system (a mobile station and a base station) that implements the multi-band radio communication method according to the present invention.
[Fig. 14] Fig. 14 is a flowchart of another example of the operation of a system (a mobile station and a base station) that implements the multi-band radio communication method according to the present invention.
[Fig. 15] Fig. 15 is a configuration example of an incoming-call notification (paging) channel.
[Fig. 16] Fig. 16 is a configuration example of a control information channel.
[Fig. 17] Fig. 17 is a flowchart of process of determining a frequency band of a base station to be used when a new frequency band is added.
[Fig. 18] Fig. 18 depicts a service area image to implement a multi-band radio communication method according to a twelfth embodiment.
[Fig. 19] Fig. 19 is a configuration example of a base station according to the twelfth embodiment.
[Fig. 20-1] Fig. 20-1 is a specific example of a frequency arrangement according to a thirteenth embodiment.
[Fig. 20-2] Fig. 20-2 is another specific example of the frequency arrangement according to the thirteenth embodiment.
[Fig. 20-3] Fig. 20-3 is still another specific example of the frequency arrangement according to the thirteenth embodiment.
[Fig. 21] Fig. 21 is a specific example of a base station arrangement according to a fourteenth embodiment.
[Fig. 22-1] Fig. 22-1 is a schematic diagram for explaining spreading of multicarrier CDMA signals.
[Fig. 22-2] Fig. 22-2 is a schematic diagram for explaining spreading of multicarrier CDMA signals.
[Fig. 23] Fig. 23 is a flowchart of an example of frequency band allocation performed by a channel controller.
[Fig. 24] Fig. 24 is a flowchart of another example of frequency band allocation performed by a channel controller.
[Fig. 25-1] Fig. 25-1 is a flowchart of still another example of frequency band allocation performed by a channel controller.
[Fig. 25-2] Fig. 25-2 is a flowchart of still another example of frequency band allocation performed by a channel controller.
[Fig. 26] Fig. 26 depicts a bandwidth of each frequency band per one channel at the time of multi-band communication.
[Fig. 27] Fig. 27 is an example of a method of allocating bands.

### EXPLANATIONS OF LETTERS OR NUMERALS

- 1: Antenna
- 2: Filter
- 3: Frequency synthesizer
- 4: A/D converter
- 5: GI removing unit
- 6: FFT
- 7: Demodulator
- 8: Decoder
- 9: Channel controller
- 10: D/A converter
- 11: GI adder
- 12: IFFT
- 13: Modulator
- 14: Encoder
- 15: Framing unit
- 16: Timing controller

### BEST MODE(S) FOR CARRYING OUT THE INVENTION

Exemplary embodiments of a multi-band radio communication method according to the present invention are explained in detail below with reference to the accompanying drawings. The invention is not limited to the embodiments.

### First embodiment.

An outline of a multi-band radio communication method according to the present invention is explained first. The present invention explains a new communication system capable of performing high-speed transmission while maintaining high service coverage in a single system, that is, a multi-band radio communication method. The method uses a plurality of wide-separated frequency bands having a difference of propagation and diffraction characteristics, unlike conventional communication using a single frequency band. Usually, a mobile station performs communication using a high frequency, and uses a low frequency only when a propagation state of a high frequency is poor. According to the conventional radio communication, a low frequency is also used on a Line-of-Sight (LOS) path. According to this first embodiment, valuable low-frequency resource is effectively used by limiting the use of a low frequency to an absolutely necessary case. While the multi-band radio communication method uses low frequencies as a frequency resource, the proportion of the used low frequencies in the total resource is very small. On the other hand, system performance equivalent to that obtained when the total resource is a low-frequency band can be obtained.

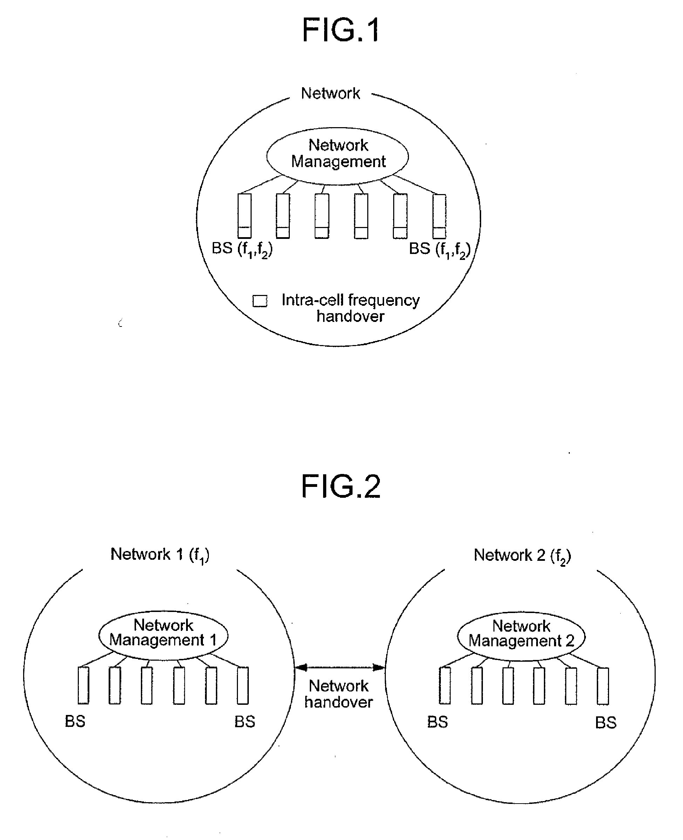

A difference of a network configuration between the present invention and a conventional systems is explained below. Fig. 1 depicts a network configuration using a multi-mode terminal (a mobile station) according to the present invention. Fig. 2 depicts a conventional network configuration.

In a conventional system, to mutually complement service areas, a network handover is performed between a plurality of systems according to a propagation state. The plurality of systems has different frequencies in some cases. Each network has its own system using each frequency, and the networks are handed over to each other. Because the network handover is necessary, network control load such as a change of registration of an IP address occurs. On the other hand, according to the present invention, frequencies are basically switched within the service area within one base station. In this case, the process is completed at an MAC layer level or below. Therefore, the network handover is not necessary. Consequently, frequency changeover cost decreases, and a high-speed switch can be performed in a short time.

According to the present invention, because one system is built using a plurality of bands, a high frequency such as a millimeter wave in which a system cannot be easily built can be flexibly used. Further, a plurality of frequencies can be finely controlled according to the state of the entire traffic. Therefore, a low frequency can be controlled to be allocated to only absolutely necessary mobile stations.

According to the present invention, one system is configured using a plurality of scattered frequency bands. Therefore, the present invention can be applied to a state where frequency bands allocated to service are scattered. When frequencies are reorganized, use of a part of frequency bands to be reorganized can be reserved, and reorganized frequency bands can be included in the system. Therefore, frequencies can be reorganized flexibly.

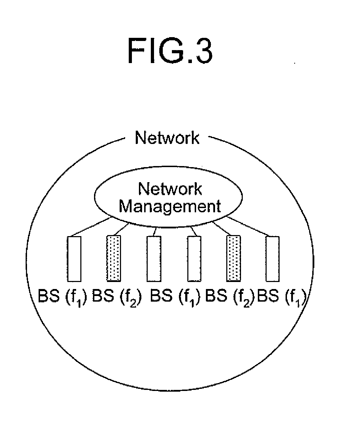

A network configuration as shown in Fig. 3 can be also considered. In this case, a base station is different for each frequency. Each base station is under the same network management (within one system), and information of a mobile station is shared among the base stations. A mobile station can be handed over between base stations by coordination. The network configuration corresponds to that of the current PDC base station.

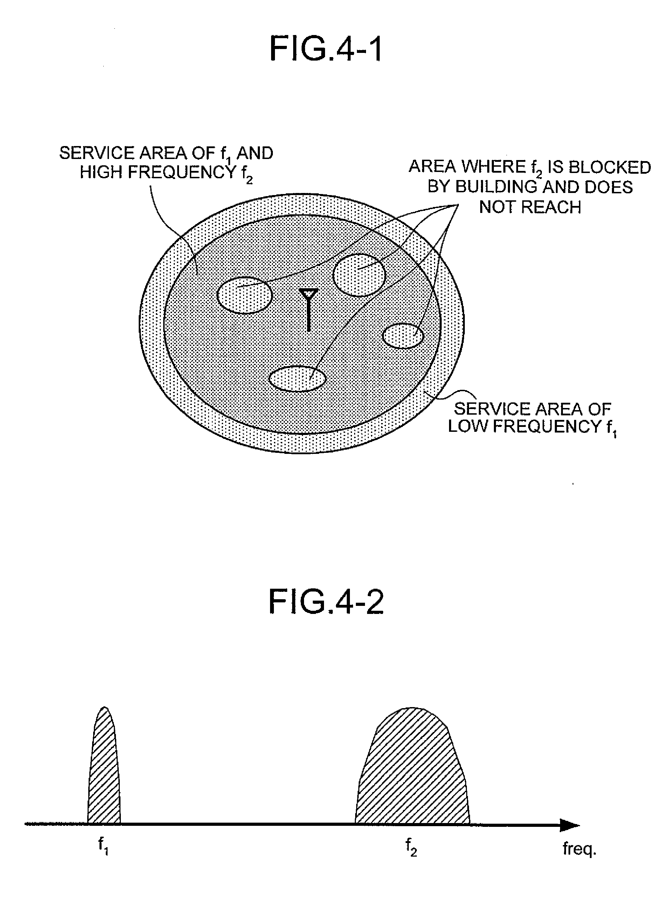

A specific example of the multi-band radio communication method according to a first embodiment is explained next. Fig. 4-1 depicts a service image according to the first embodiment. The base station simultaneously provides communication service, using at least two discontinuous frequency bands f₁ and f₂, where f₁<f₂. Fig. 4-2 depicts a relationship between frequencies of the frequency bands f₁ and f₂ to be used. Generally, a broader service area can be secured in a low frequency than in a high frequency, and there arise areas where f₂ cannot be used in the cover area of the base station.

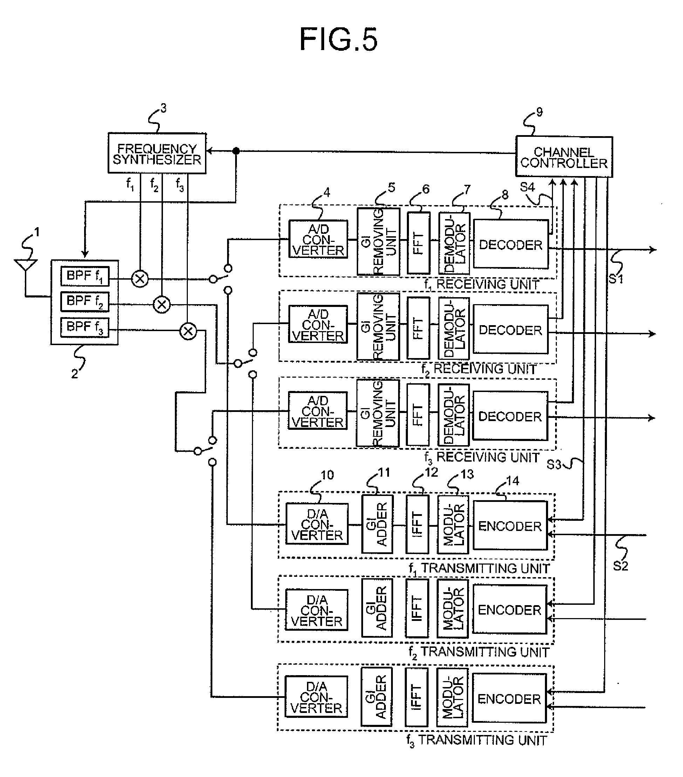

Fig. 5 depicts a configuration of a base station using an OFDM communication system. In Fig. 5, the base station includes an antenna 1, a filter 2, a frequency synthesizer 3, an A/D converter 4, a GI removing unit 5, an FFT 6, a demodulator 7, a decoder 8, a channel controller 9, a D/A converter 10, a GI adder 11, an IFFT 12, a modulator 13, and an encoder 14. The base station shown in Fig. 5 uses two or more discontinuous frequency bands. In this example, three kinds of frequencies f₁, f₂, f₃ (f₁<f₂<f₃) are used. S1 denotes a receiving apparatus output, S2 denotes a transmission signal, S3 denotes control information transmitted to a mobile station, and S4 denotes control information transmitted from the mobile station. A transmitting unit and a receiving unit are prepared for each frequency band (corresponds to a part encircled by a dotted line), and can transmit and receive simultaneously.

The operation according to the first embodiment is explained. A mobile station that starts communication transmits a communication starting request to the base station in a prescribed access system. The base station receives a signal with the antenna 1, and extracts the control information S4 transmitted from the mobile station, via the corresponding filter 2, the A/D converter 4, the GI removing unit 5, the FFT 6, the demodulator 7, and the decoder 8. The control information S4 includes information concerning a channel state in each of the frequency bands. A user can know from the control information S4 which frequency band signal the mobile station can receive. The channel controller 9 allocates a band to a new communication starting request.

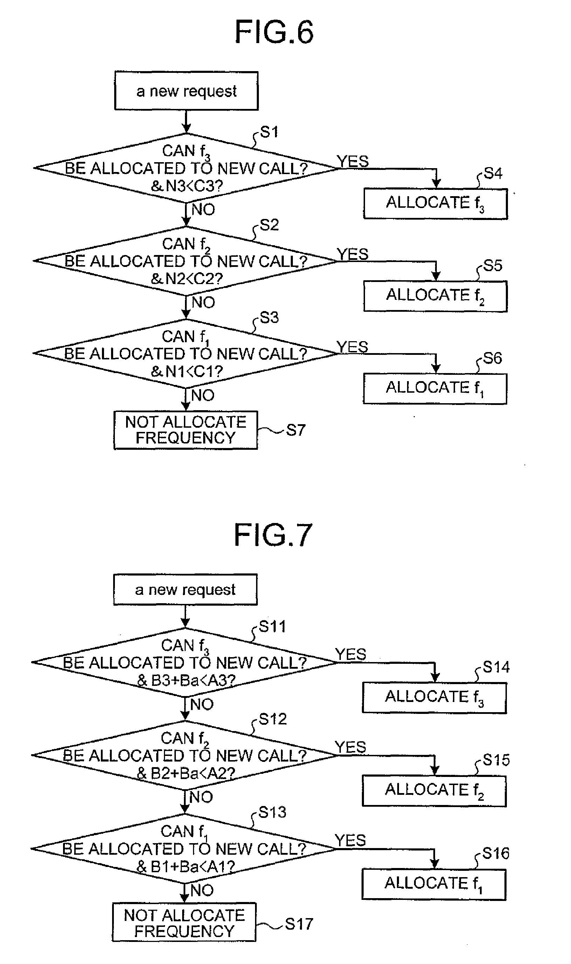

Fig. 6 is an example of a method of allocating bands by the channel controller 9. In Fig. 6, C₁, C₂, C₃ indicate the number of users that the frequency bands f₁, f₂, f₃ can accommodate, and N₁, N₂, N₃ indicate the number of users currently using the respective bands. According to the present embodiment, users are assumed to use the same band. The channel controller 9 sequentially checks, from a high frequency, whether the respective frequencies can be allocated to a new user (N<C) (steps S1, S2, S3). When the respective frequencies can be allocated to a new user (steps S1, S2, S3, Yes), the channel controller 9 determines a frequency to be allocated (steps S4, S5, S6). On the other hand, when the respective frequencies cannot be allocated to a new user (steps S1, S2, S3, No), the channel controller 9 does not perform the allocation process (step S7).

Thereafter, the channel controller 9 transmits the control information S3 concerning channel allocation to the corresponding transmitting unit, and notifies the mobile station of the control information S3, via the encoder 14, the modulator 13, the IFFT 12, the GI adder 11, the D/A converter 10, the filter 2, and the antenna 1. In the actual communication, the frequency synthesizer 3 is controlled based on the control information from the channel controller 9. Communication is performed using the allocated frequency band.

As explained above, according to the present embodiment, users can be allocated with priority to a high-frequency band having a large accommodation number of users. Accordingly, a high-speed broad service area can be realized in the communication system as a whole.

Not only the process shown in Fig. 6, the channel controller 9 can also allocate frequencies by considering a moving speed of a mobile station, amount of interference from adjacent mobile stations and cells, field strength, a delay spread, and a signal-to-interference plus noise power ratio (SINR) in each frequency band. According to the present embodiment, the invention can be also applied to frequencies of different propagation environments, and to scattered frequency bands of similar propagation environments. In this case, there is an advantage that the invention can be applied to a situation in which frequency bands allocated to one radio communication service are dispersed.

While a configuration of a transmitting and receiving apparatus using the OFDM transmission is explained with reference to Fig. 5, the present invention can be also applied to an existing transmission system other than the OFDM by replacing the transmitting and receiving apparatus with that using another communication system.

Second embodiment.
The operation according to a second embodiment is explained next. Constituent elements similar to those of the first embodiment described above are denoted by like reference numerals and explanations thereof are omitted. Only processes different from those of the first embodiment described above are explained below.

Fig. 7 is an example of a method of allocating bands by the channel controller 9, different from the first embodiment described above. In Fig. 7, Ba denotes a radio resource amount required by a mobile station, A₁, A₂, A₃ indicate the amounts of radio resources of the system corresponding frequency bands, and B₁, B₂, B₃ indicate the amounts of radio resources currently used in respective frequencies. The radio resource amounts are parameters representing capacities of the system, and are given as a communication transmission speed, a band used, and a corresponding number of reference mobile stations.

According to the present embodiment, a mobile station requesting a start of new communication transmits the control information S4 containing a radio resource amount Ba requesting a new allocation. The channel controller 9 sequentially checks, from a high frequency, whether the respective frequencies can be allocated to a new user ((B+Ba)<A) (steps S11, S12, S13). When the respective frequencies can be allocated to a new user (steps S11, S12, S13, Yes), the channel controller 9 determines a frequency to be allocated (steps S14, S15, S16). On the other hand, when the respective frequencies cannot be allocated to a new user (steps S11, S12, S13, No), the channel controller 9 does not perform the allocation process (step S17). In other words, according to the present embodiment, the channel controller 9 compares each of the radio resource amounts A1, A₂, A₃ that the system of the frequency band has with a sum of each of the radio resource amounts B₁, B₂, B₃ currently used and the requested radio resource amount Ba, and determines whether the new user can be accommodated in each frequency band, based on a result of the comparison. The channel controller 9 makes the determination starting from a high-frequency band. Information concerning the determined allocation frequency is notified to the mobile station via the transmitting unit, and data communication is started.

As described above, according to the present embodiment, users can be allocated to a high-frequency band with priority, in the system having different bandwidths used and a different transmission speed for each user or each mobile station. Accordingly, a high-speed broad service area can be realized in the communication system as a whole.

According to the present embodiment, the channel controller 9 can also allocate frequencies by considering a moving speed of a mobile station, amount of interference from adjacent mobile stations and cells, field strength, a delay spread, and a signal-to-interference plus noise power ratio (SINR), in addition to the result of checking the line state described above.

### Third embodiment.

The operation according to a third embodiment is explained next. Constituent elements similar to those of the first embodiment described above are denoted by like reference numerals and explanations thereof are omitted. Only processes different from those of the first or second embodiment described above are explained below.

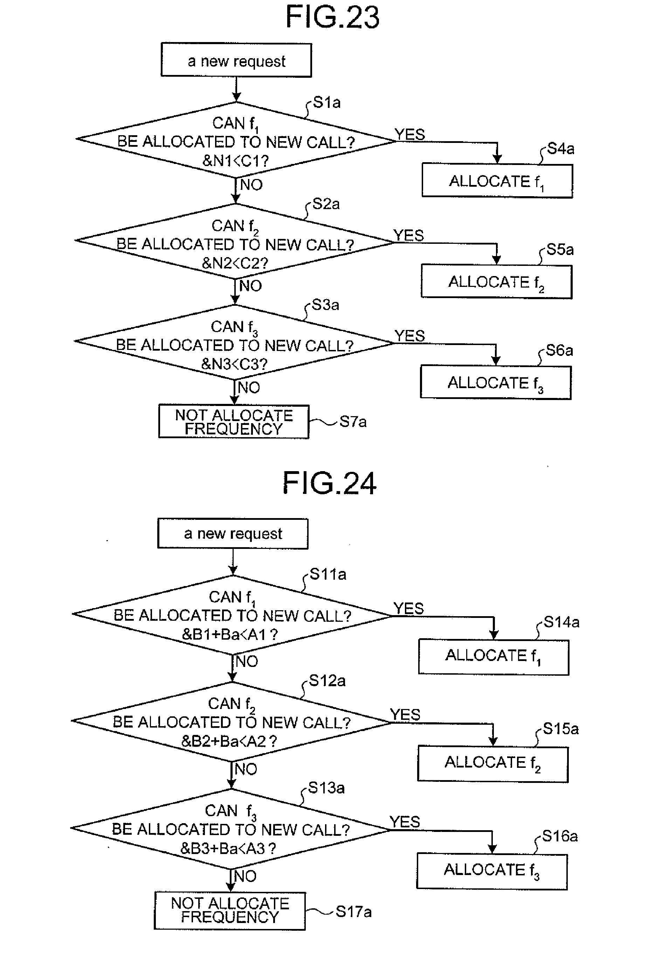

Fig. 23 and Fig. 24 are examples of a method of allocating bands by the channel controller 9, different from the first embodiment described above. In the system similar to that of the first embodiment, a mobile station usually performs communication using a frequency having a broad cover area. A mobile station can easily move due to usage of a low frequency. On the other hand, when the low-frequency band becomes full and when the band cannot accommodate an additional mobile station any more, the mobile stations are sequentially changed to high-frequency mobile stations. The switching is determined based on a position of a mobile station, a state of the area of each frequency band, a band necessary for communication, field strength, and moving speeds around the mobile station.

Specifically, the channel controller 9 sequentially checks, starting from a low frequency, whether the respective frequencies can be allocated to a new user (N<C) (steps S1a, S2a, S3a). When the respective frequencies can be allocated to a new user (steps S1a, S2a, S3a, Yes), the channel controller 9 determines a frequency to be allocated (steps S4a, S5a, S6a). On the other hand, when the respective frequencies cannot be allocated to a new user (steps S1a, S2a, S3a, No), the channel controller 9 does not perform the allocation process (step S7a). The channel controller 9 sequentially checks, from a low frequency, whether the respective frequencies can be allocated to a new user ((B+Ba)<A) (steps S11a, S12a, S13a). When the respective frequencies can be allocated to a new user (steps S11a, S12a, S13a, Yes), the channel controller 9 determines a frequency to be allocated (steps S14a, S15a, S16a). On the other hand, when the respective frequencies cannot be allocated to a new user (steps S11a, S12a, S13a, No), the channel controller 9 does not perform the allocation process (step S17a).

As explained above, according to the present embodiment, the number of times of handovers at a mobile station between frequencies decreases, by basically using a low frequency. Further, many mobile stations can be accommodated, and frequency resources can be effectively used.

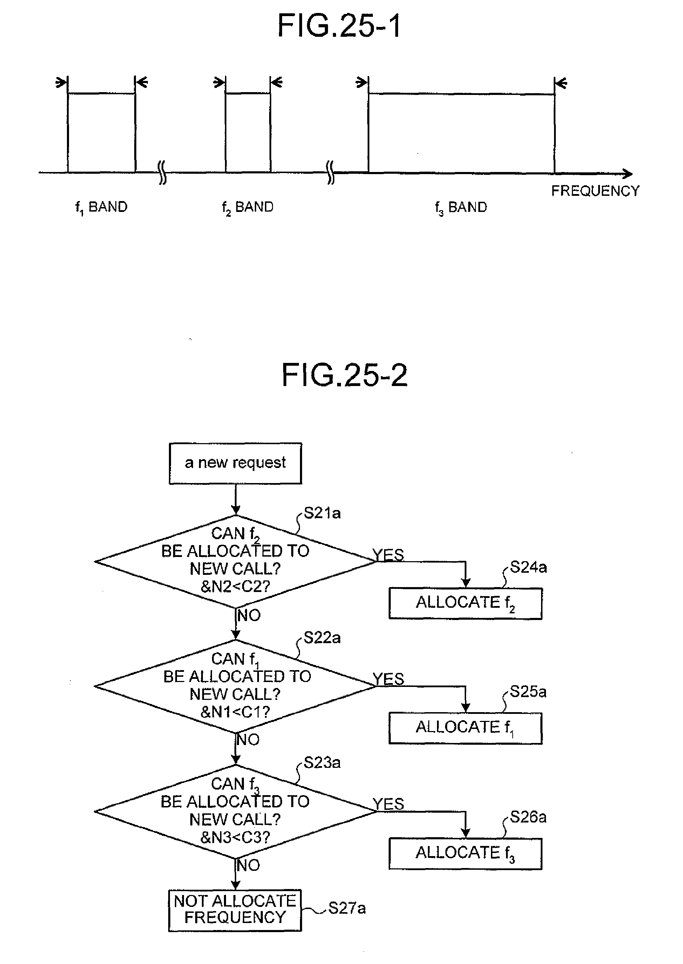

Methods of sequentially allocating frequencies starting from a high frequency or a low frequency are described in the first, second, and third embodiments. The order of allocating frequencies can be also determined in the order of bandwidths for each frequency (a wide order, or a narrow order) allocated to the entire system, as shown in Fig. 25-1 and Fig. 25-2.

Specifically, the channel controller 9 checks whether the respective frequencies can be allocated to a new user (N<C), in the narrow order of bandwidth for each frequency allocated to the entire system (steps S21a, S22a, S23a). When the respective frequencies can be allocated to a new user (steps S21a, S22a, S23a, Yes), the channel controller 9 determines a frequency to be allocated (steps S24a, S25a, S26a). On the other hand, when the respective frequencies cannot be allocated to a new user (steps S21a, S22a, S23a, No), the channel controller 9 does not perform the allocation process (step S27a).

The channel controller 9 can also determine an allocation order based on a bandwidth required by a mobile station and an idle state.

### Fourth embodiment.

The operation according to a fourth embodiment is explained next. Constituent elements similar to those of the first embodiment described above are denoted by like reference numerals and explanations thereof are omitted. Only processes different from those of the first, second, or third embodiment described above are explained below.

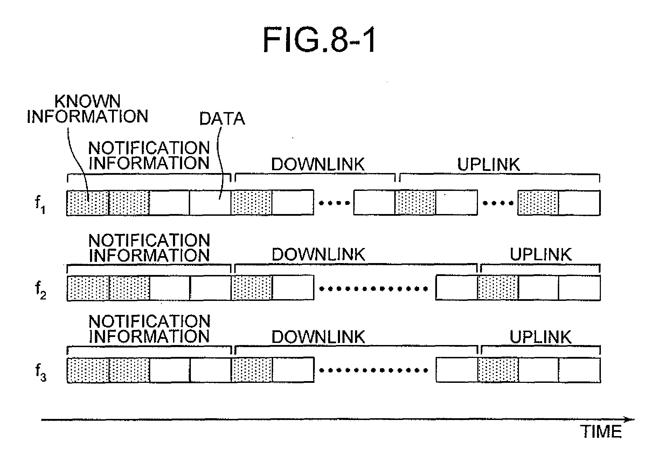

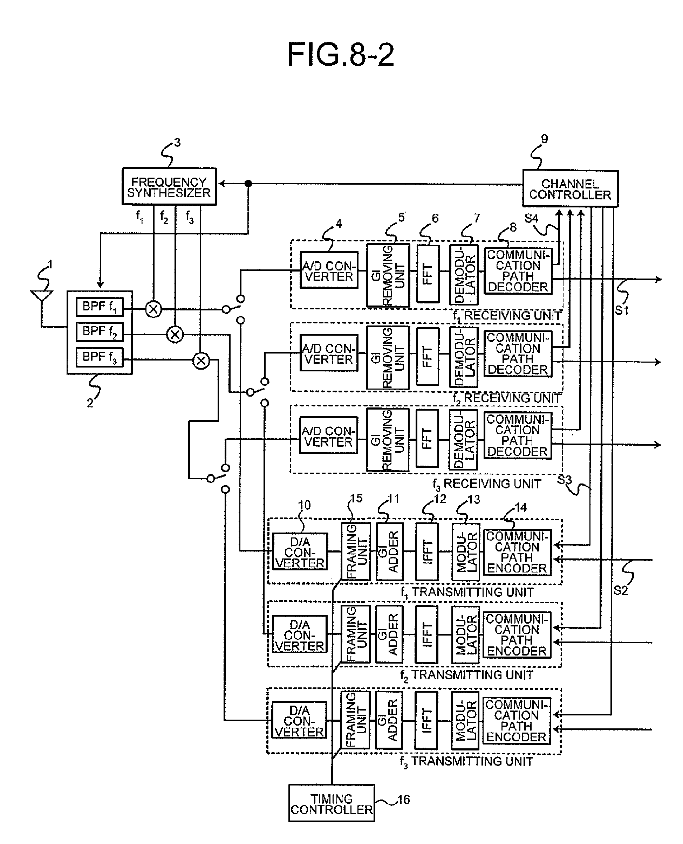

Fig. 8-1 is an example of a frame configuration that can be used in the multi-band radio communication method according to the present invention, and Fig. 8-2 is a configuration example of a base station that realizes the configuration of the present frame. In the present embodiment, the OFDM system is assumed to be used. A framing unit 15 and a timing controller 16 are present in the transmitting unit of the base station. The timing controller 16 controls a transmission timing to synchronize an OFDM symbol timing and a frame timing in a plurality of frequency bands. In other words, according to the present embodiment, when time is synchronized using a specific frequency band signal (a known signal), the OFDM timing of other frequency band can be received at the same timing (the same FFT window setting position). Frame configurations are also synchronized in all frequency bands, and notification information is transmitted to the specific position based on a certain time point. In other words, when notification information of a specific wave band is received in advance, transmission time of notification information in other frequency band is determined. The notification information means broadcast information containing beacon indicating the presence of a base station and a known signal to measure a transmission path from the base station.

Fig. 8-1 is an example in which notification information is output at the same timing in all frequency bands. When a condition of establishing a frame timing of other frequency band from the frame timing of a specific frequency band is satisfied, the timing does not need to be the same. In the OFDM, a time gap within a guard interval is permitted including a delay wave. The same timing according to the present embodiment means that substantially all received signals reach in a time gap equal to or smaller than the guard interval at the receiving side (although a signal that exceeds the guard interval generates interference, the amount of interference does not substantially affect the transmission characteristic).

While Fig. 8-1 is an example that a downlink and an uplink are time divided (a TDD system), the uplink and the downlink can use different frequencies (an FDD system).

While symbol frame time is assumed to be the same in different frequency bands in Fig. 8-1, symbol frame time can be in an integral multiple relation. In this case, a symbol frame of other frequency band can be also easily determined from the symbol frame timing of a specific frequency band.

When the OFDM communication system is not used, a timing synchronization can be easily established by arranging a frame configuration communicated in each frequency band. The frame configuration in this case is a minimum unit of a packet length used in communication, and means that a time when the information transmitting unit allocated to a specific user is switched to the information transmitting unit allocated to other user is consistent in a plurality of frequency bands.

As explained above, the base station establishes a time synchronization of a frame configuration, in signals transmitted in a plurality of frequency bands. Therefore, a mobile station can easily transmit and receive data even when any frequency band is allocated to the mobile station.

Fifth embodiment.
The operation according to a fifth embodiment is explained next. Constituent elements similar to those of the first embodiment described above are denoted by like reference numerals and explanations thereof are omitted. Only processes different from those of the first to fourth embodiments described above are explained below.

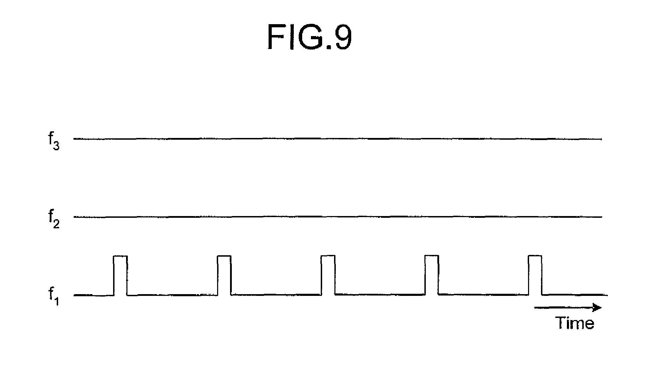

Fig. 9 is an example of a transmission timing of notification information. In the present embodiment, the base station outputs notification information to only the lowest-frequency band f₁, simultaneously establishes a frame of all frequency bands, and notifies a frame using state, using a single frequency band. In other words, as shown in Fig. 4-1, according to the present embodiment, notification information is output in the frequency band f₁ used in the largest service range. In the frequency band other than f₁, communication is performed based on the notification information transmitted in f₁, and the same OFDM symbol timing is used, like in the process described in the fourth embodiment.

As explained above, according to the present embodiment, the base station integrates the notification information in the frequency band that covers the largest service range. With this arrangement, the number of frequency bands that the base station in a sleep mode periodically receives is decreased to one, thereby suppressing power consumption.

As shown in Fig. 4-1, the notification information is output using the lowest frequency band, because, generally, a low frequency has a large service range and also because power consumption necessary for the reception is small. However, when a frequency band has the largest service range, the frequency band used is not limited to the lowest frequency band.

When a system permits an area in which notification information cannot be obtained (see Fig. 4-1), the notification information can be output to any one of frequency bands, regardless of the size of the service range. For example, notification information can be arranged to be output to only f₂ shown in Fig. 4-1.

### Sixth embodiment.

The operation according to a sixth embodiment is explained next. Constituent elements similar to those of the first embodiment described above are denoted by like reference numerals and explanations thereof are omitted. Only processes different from those of the first to fifth embodiments described above are explained below.

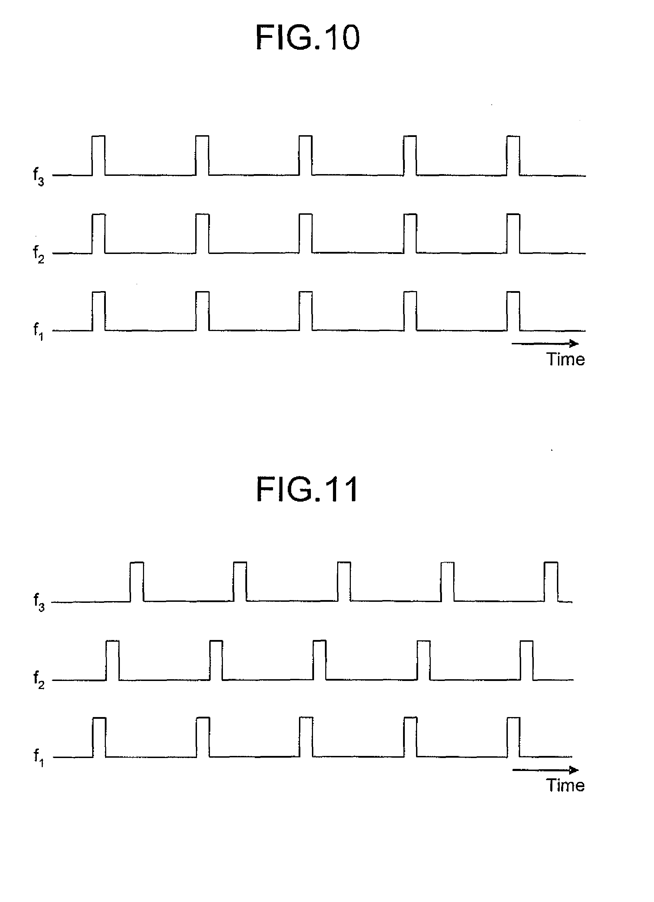

Fig. 10 is an example of a transmission timing of notification information. According to the present embodiment, notification information is transmitted to all frequency bands at the same timing. Therefore, the mobile station performs timing synchronization in any one of frequency bands. In this case, the same OFDM symbol timing is used, like in the process described in the fourth embodiment.

As explained above, according to the present embodiment, notification information is transmitted to all frequency bands at the same timing. Therefore, when timing synchronization is performed in any one frequency band, the OFDM symbol of other frequency band can be received at the same reception timing (an FFT window setting position).

According to the present embodiment, notification information can be received without requiring each mobile station to change a communication frequency. Therefore, the configuration of a mobile station can be simplified. Further, the invention can be applied to a mobile station that can perform transmission and reception in only a specific frequency band.

### Seventh embodiment.

The operation according to a seventh embodiment is explained next. Constituent elements similar to those of the first embodiment described above are denoted by like reference numerals and explanations thereof are omitted. Only processes different from those of the first to sixth embodiments described above are explained below.

Fig. 11 is an example of a transmission timing of notification information. According to the present embodiment, notification information is transmitted to all frequency bands at different timings. Therefore, the mobile station performs timing synchronization in any one of frequency bands. In this case, the same OFDM symbol timing is used, like in the process described in the fourth embodiment. However, transmission timing of notification information to each frequency band is prescribed (a constant frequency). When frames are synchronized in a specific frequency band (when a position of notification information is known), a position of notification information in other frequency band can be automatically determined. In this case, the same OFDM symbol timing is used, like in the process described in the fourth embodiment.

According to the present embodiment explained in connection with Fig. 11, each base station can collect notification information in each frequency band by changing over frequencies in a short time. The present embodiment can be also applied to a mobile station that can perform transmission and reception in only a specific frequency band.

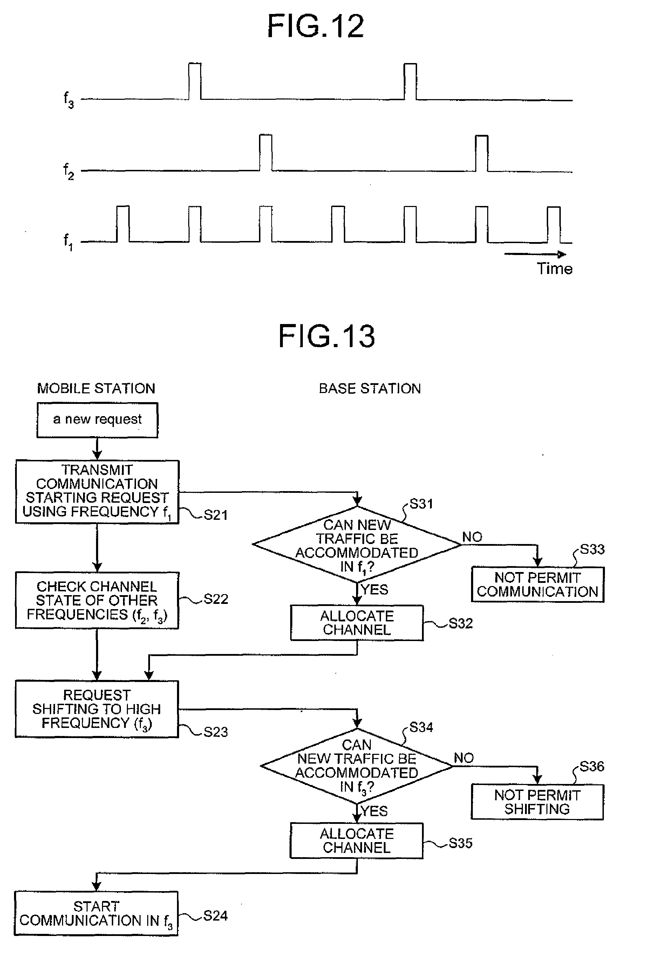

Fig. 12 is an example of a transmission timing of notification information, different from that shown in Fig. 11. In Fig. 12, notification information is transmitted to all frequency bands at different timings, and the notification information is transmitted in each frequency band at different repetitions or frequencies. For example, most parts of necessary information are transmitted in the low frequency band f₁, as notification information, and minimum necessary information can be transmitted in the high frequencies f₂ and f₃. In this case, the same OFDM symbol timing is used, like in the process described in the fourth embodiment.

According to the present embodiment explained in connection with Fig. 12, the occupation rate of notification information becomes small, and the system throughput can be improved. Notification information can be transmitted simultaneously or at different timings in each frequency band.

During a moving of the mobile station, Doppler frequency is different depending on the frequency, and a propagation path is also different. Because Doppler frequency becomes high when a frequency become higher, notification information can be inserted into a high frequency at high repetitions to maintain a satisfactory synchronization (a phase follow) by a receiving unit. Signals can be transmitted highly efficiently, by transmitting notification information at different repetitions.

### Eighth embodiment.

The operation according to an eighth embodiment is explained next. In the present embodiment, a multi-band radio communication method in a system that simultaneously provides a communication service using a plurality of discontinuous frequency bands is explained. Constituent elements similar to those of the first embodiment described above are denoted by like reference numerals and explanations thereof are omitted. Only processes different from those of the first to seventh embodiments described above are explained below.

Fig. 13 is an example of an operation flow of a system (a mobile station and a base station) that achieves the multi-band radio communication method according to the present invention. In the present embodiment, three kinds of frequencies f₁, f₂, f₃, (f₁<f₂<f₃) are assumed to be used.

First, a radio station in which a new traffic occurs transmits a communication starting request to the base station, using the lowest frequency f₁ (step S21). The base station determines whether a new traffic can be accommodated in the band of f₁ (step S31). When a new traffic can be accommodated in the band of f₁ (step S31, Yes), the base station allocates a channel, and notifies the mobile station of this event (step S32). On the other hand, when a new traffic cannot be accommodated in the band of f₁ (step S31, No), the base station does not permit communication (step S33).

On the other hand, the mobile station checks the line state for frequency bands other than f₁, and determines a usable frequency band (step S22). The mobile station transmits a shifting request to a higher frequency band as far as possible (for example, f₃), to the base station, after receiving a channel allocation of f₁ from the base station (step S23). The base station determines whether a traffic can be accommodated in the frequency band f₃ (step S34). When a traffic can be accommodated in the frequency band f₃ (step S34, Yes), the base station allocates the channel and notifies the mobile station of this event (step S35). On the other hand, when a traffic cannot be accommodated in the frequency band f₃ (step S34, No), the base station does not permit the shifting (step S36).

Thereafter, the mobile station starts communication after receiving the channel allocation of the frequency band f₃ (step S24). The process at step S31 and step S34 can be the process corresponding to each frequency shown in Fig. 6, Fig. 7, Fig. 23, Fig. 24, and Fig. 25-2.

As explained above, according to the present embodiment, a mobile station first transmits a communication starting request of starting communication from the lowest frequency band. After the mobile station is connected in the lowest frequency band, the mobile station transmits a frequency shifting request of shifting to a higher frequency. For example, at the initial stage of the introduction a new system, not all base stations cannot support a plurality of frequency bands. In addition to the frequency band conventionally used, a new frequency band can be added to the system. In this case, each mobile station starts communication in a frequency band provided conventionally. After confirming the support of a higher frequency, the mobile station transmits a request for a shifting to the higher frequency band. With this arrangement, a smooth system operation and frequency expansion become possible. Generally, it is considered that a maximum band per user of the newly added band becomes larger than the maximum band per user permitted to the conventional system. Therefore, new and old systems can coexist, as a result of requesting the allocation of a broad band at the time of shifting to a high-frequency band, after connecting in a narrow band at the first stage.

The frequency band to be requested at the communication start time does not need to be the lowest frequency band. For example, the frequency band request at the communication start time can be an optional frequency band, and thereafter, the frequency can be shifted to other frequency band. In the process at steps S31 and S34, it can be determined whether the frequency band can be shifted, by considering a moving speed of the mobile station, the amount of interference from adjacent mobile stations and cells, field strength, a delay spread, and a signal-to-interference plus noise power ratio (SINR).

### Ninth embodiment.

The operation according to a ninth embodiment is explained next. In the present embodiment, a multi-band radio communication method different from that of the eighth embodiment is explained. Constituent elements similar to those of the first embodiment described above are denoted by like reference numerals and explanations thereof are omitted. Only processes different from those of the eighth embodiment described above are explained below.

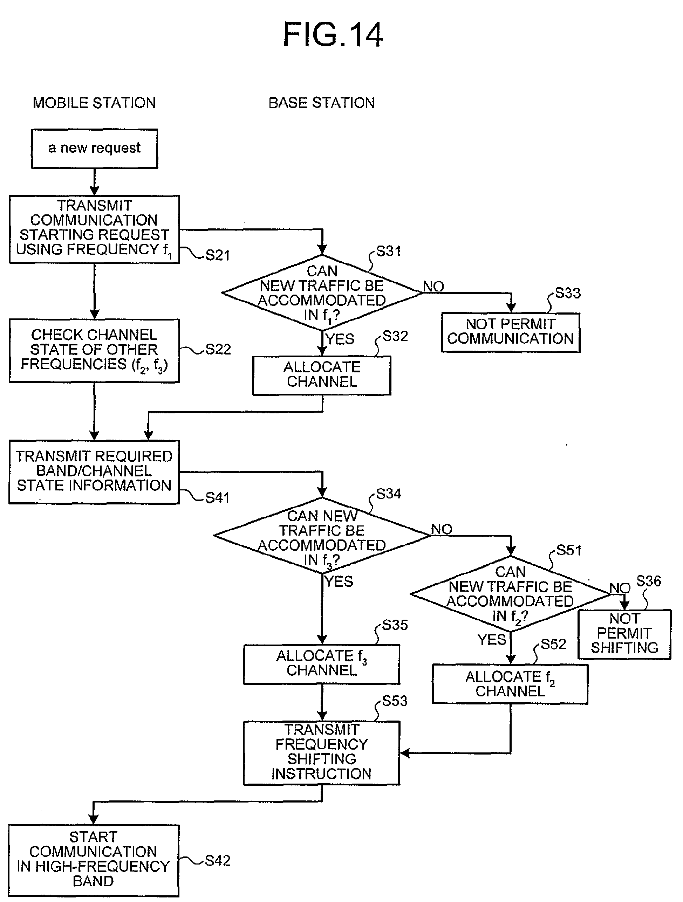

Fig. 14 is an example of an operation flow of a system (a mobile station and a base station) that achieves the multi-band radio communication method according to the present invention. In the present embodiment, the three kinds of frequencies f₁, f₂, f₃, (f₁<f₂<f₃) are assumed to be used.

First, the radio station transmits a communication starting request to the base station, using the lowest frequency f₁ (step S21), like in the eighth embodiment. The mobile station checks a line state about a frequency band other than f₁ (step S22). After the channel of f₁ is allocated from the base station, the mobile station transmits information concerning a required bandwidth and a line state (a channel state) of each frequency band, to the base station (step S41).

The base station determines whether traffic from the high-frequency bands can be accommodated (in the order of f₃ and f₂), based on a channel state of the mobile station that receives the line state and the required bandwidth (steps S34 and S51). When the traffic can be accommodated (step S34, Yes, or step S51, Yes), the base station allocates the channel (step S35 or step S52), and transmits a frequency shifting instruction to the mobile station (step S53). On the other hand, when the traffic cannot be accommodated (step S34, No, or step S51, No), the base station does not permit the shifting (step S36).

Thereafter, the mobile station starts communication after receiving the channel allocation of the frequency band (step S42).

As explained above, according to the present embodiment, the base station determines whether traffic can be accommodated in the order of f₃ and f₂, notifies the mobile station of a result of the channel allocation and a frequency shifting instruction, and shifts to a high-frequency band following the instruction. In other words, unlike the embodiments described above, the base station instructs the shifting of a frequency band. Accordingly, the old and new systems can coexist.

### Tenth embodiment.

The operation according to a tenth embodiment is explained next. In the present embodiment, an incoming-call notification channel in a system that simultaneously provides a communication service using a plurality of discontinuous frequency bands is explained. Constituent elements similar to those of the first embodiment described above are denoted by like reference numerals and explanations thereof are omitted. Only processes different from those of the eighth or ninth embodiment described above are explained below.

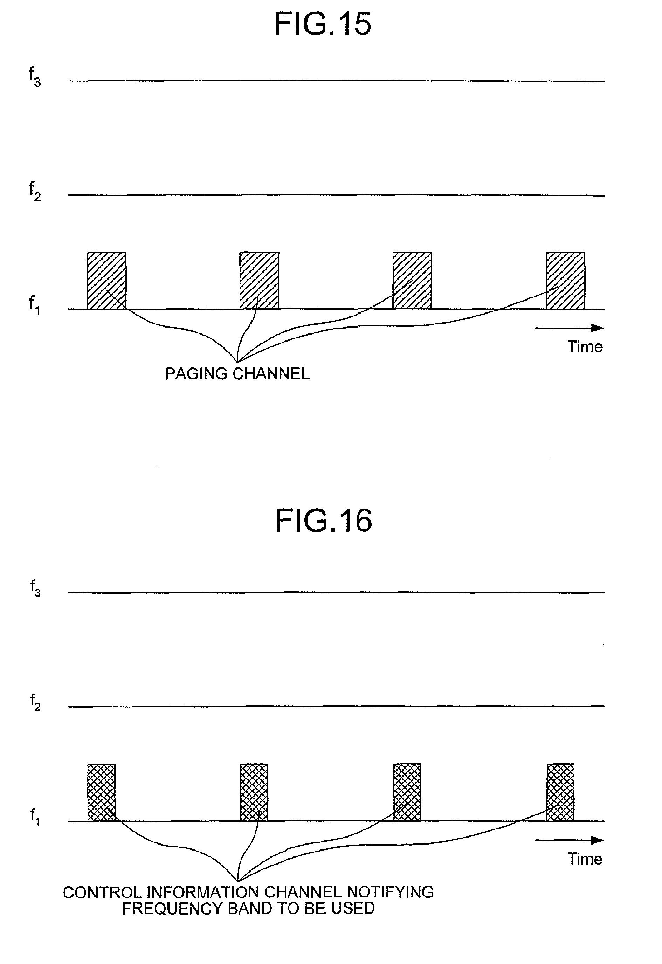

Fig. 15 is a configuration example of an incoming-call notification (paging) channel. In the radio communication, a mobile station is divided into a communication state and a standby state. In the communication state, the mobile station performs communication. In the standby state, the mobile station waits for the arrival of a call from other user while keeping the power supply on. A standby terminal (a mobile station waiting for a reception) detects a paging channel transmitted from the base station, and always checks the presence of an incoming-call. When there is an incoming-call, the operation shifts to the communication starting.

According to the present embodiment, the base station transmits a paging channel using the lowest frequency band, because generally a lower frequency has a larger service range and because power consumption necessary for reception is small. Accordingly, in the system that simultaneously provides a communication service using a plurality of discontinuous frequency bands, a standby terminal detects only one frequency band, and does not need to change over frequencies. As a result, the reception process during the standby can be simplified.

For example, all base stations are not always able to support a plurality of frequency bands at the initial period of the introduction of a new system. In addition to the frequency band used conventionally, a new frequency band can be also added to the system. In this case, when a mobile station waits using a specific frequency band conventionally used, the mobile station can stably wait for a frequency band regardless of a configuration of other frequency band.

In the present embodiment, transmission of a paging channel using the lowest frequency band is explained. However, when a specific frequency band is used, the frequency band used is not limited to the lowest frequency band.

### Eleventh embodiment.

The operation according to an eleventh embodiment is explained next. In the present embodiment, a control information channel in a system that simultaneously provides a communication service using a plurality of discontinuous frequency bands is explained. Constituent elements similar to those of the first embodiment described above are denoted by like reference numerals and explanations thereof are omitted. Only processes different from those of the eighth to tenth embodiments are explained below.

Fig. 16 is a configuration example of a control information channel. A mobile station receives a notification of a usable frequency band using a control information channel from the base station, in starting communication. According to the present embodiment, the base station transmits a control information channel using the lowest frequency band, because generally a lower frequency has a larger service range and because power consumption necessary for reception is small. Accordingly, in the system that simultaneously provides a communication service using a plurality of discontinuous frequency bands, a terminal detects a determined part of one frequency ban. As a result, the reception process of detecting usable frequency information can be substantially simplified.

For example, all base stations are not always able to support a plurality of frequency bands at the initial period of the introduction of a new system. In addition to the frequency band used conventionally, a new frequency band can be also added to the system. In this case, when a mobile station receives control information containing a usable frequency band using a specific frequency band conventionally used, the mobile station can stably receive control information regardless of a configuration of other frequency band. When the mobile station receives control information using a specific frequency band and also when the mobile station shifts to other frequency band based on the control information, the mobile station can perform a smooth multi-band radio reception.

In the present embodiment, control information contained in the used frequency is described. However, notification of other control information does not need to follow the channel configuration. While transmission of a control information channel using the lowest frequency band is described, the frequency band does not need to be the lowest frequency band when a specific frequency band is used.

### Twelfth embodiment.

The operation according to a twelfth embodiment is explained next. In the present embodiment, addition of a frequency used in a system that simultaneously provides a communication service using a plurality of discontinuous frequency bands is explained. Constituent elements similar to those of the first embodiment described above are denoted by like reference numerals and explanations thereof are omitted. Only processes different from those of the eighth to eleventh embodiments described above are explained below.

When a frequency band is added by acquiring a license of a new frequency band in a multi-band radio communication, a mobile station within the system has a coexistence of new and old frequency bands.

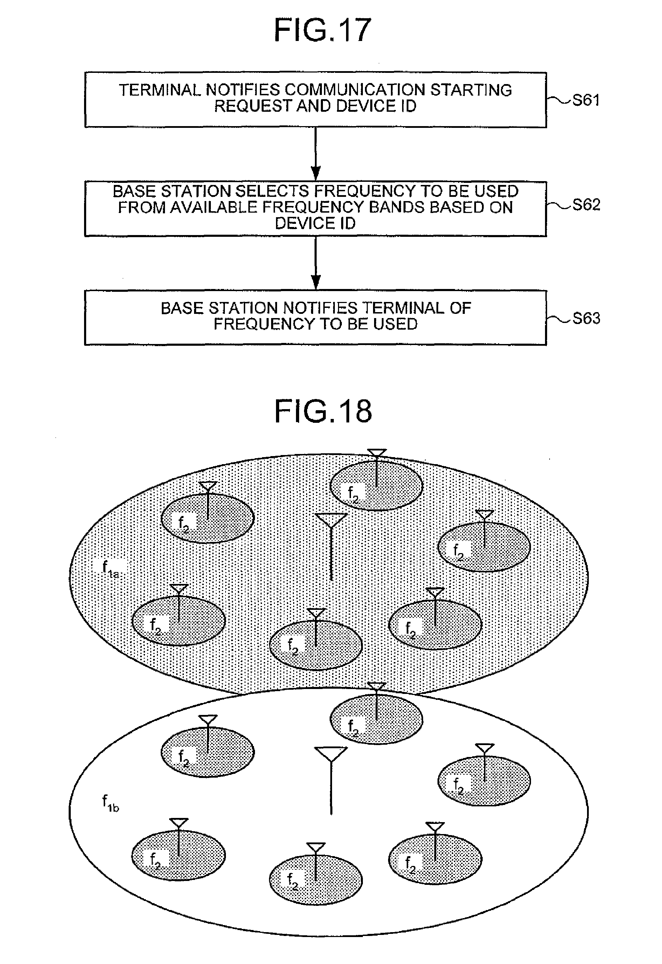

Fig. 17 depicts a process of determining a frequency band of the base station to be used when a new frequency band is added. First, the base station receives from the mobile station an ID indicating a model of the mobile station with a communication starting request (step S61). The base station determines a model of the mobile station based on the received ID, identifies frequency bands available to the mobile station, selects a frequency band to be used from the frequency bands (step S62), and notifies the mobile station of a result of the determination (step S63). In the present embodiment, a frequency band to be used is determined by the process.

The use of a new frequency band can be instructed to a mobile station that can use a new frequency band, considering a propagation state and a traffic state. The use of a new frequency band is not instructed to a mobile station that cannot use the new frequency.

As explained above, according to the present embodiment, the base station determines a frequency band to be used corresponding to the model of a mobile station. Therefore, a new frequency band can be added smoothly.

A change of the operation frequency in the system that simultaneously provides a communication service using a plurality of discontinuous frequency bands is explained next. In the multi-band radio communications, along the change of demand for services, reorganization of frequencies allocated to services becomes necessary at the initiative of the government. As a result, a case of suspending the use of a part of frequency bands or shifting frequency bands to other frequency bands occurs.

Therefore, according to the present embodiment, the channel controller 9 shown in Fig. 5 stops allocating mobile stations to frequency bands of which use is to be stopped. With this arrangement, even when the channel controller 9 stops allocating mobile stations to the frequency bands of which use is to be stopped, services can be provided continuously when other existing frequency bands can be used.

As explained above, when the use of a part of frequency bands is to be stopped or when mobile stations shift to other frequency bands, the channel controller 9 does not allocate the mobile stations to the frequency bands of which use is to be stopped. Therefore, reorganization of frequencies performed at the initiative of the government can be flexibly coped with.

### Thirteenth embodiment.

The operation according to a thirteenth embodiment is explained next. In the thirteenth embodiment, a multi-band radio communication method in a system that simultaneously provides a communication service using a plurality of discontinuous frequency bands is explained. Constituent elements similar to those of the first embodiment described above are denoted by like reference numerals and explanations thereof are omitted.

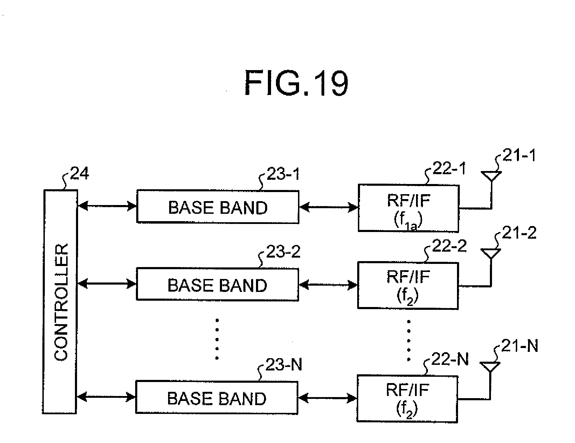

Fig. 18 depicts a service area image to achieve the multi-band radio communication method according to the thirteenth embodiment. Fig. 19 depicts a configuration of a base station according to the thirteenth embodiment. In Fig. 19, the base station includes antennas 21-1 to 21-N, RF/IFs 22-1 to 22-N, base bands 23-1 to 23-N, and a controller 24. The one controller 24 corresponds to a plurality of the base bands 23-1 to 23-N and the RF/IFs 22-1 to 22-N. The RF/IF 22-1 corresponds to the low-frequency band f₁, and the rest of the RF/IFs 22-1 to 21-N correspond to the high-frequency band f₂. In the present embodiment, while a plurality of the RF/IFs 22-1 to 21-N correspond to the high-frequency band f₂, the basic process (the allocation process and the like) performed by the base station is similar to that previously described in the first embodiment.

Generally, a high frequency has a large bandwidth. Therefore, because of the output limit of the transmission amplifier, a frequency band higher than a frequency band having a narrow band has a small radius of a service area. According to the present embodiment, a plurality of cells of the frequency bands f₂ are present within the cell of the low-frequency band f₁, as shown in Fig. 15. The cells of the low-frequency band f₁ are managed by the same controller 24. Therefore, a handover can be executed at a high speed.

According to the present embodiment, because the cell radius of the high-frequency band f₂ is smaller than the cell radius of the low-frequency band f₁, the cells in the high-frequency band f₂ do not generate interference, and the frequency can be reused (f₂ can be repeatedly used), as shown in Fig. 18. In this case, an area outside the service of the high-frequency band f₂ occurs. However, because the low-frequency band f₁ covers this area, a continuous communication service can be provided. According to the present embodiment, frequency utilization efficiency can be improved, in addition to obtaining a large service area and a large-capacity transmission.

In the low-frequency band f₁, the same frequency cannot be used between adjacent cells (interference occurs). Therefore, the low-frequency band f₁ is divided into some sub-frequency bands (corresponding to f₁ₐ and f_{1b}, in the example shown in Fig. 18), thereby suppressing interference between the adjacent cells.

### Fourteenth embodiment.

The operation according to a fourteenth embodiment is explained next. In the fourteenth embodiment, a multi-band radio communication method in a system that simultaneously provides a communication service using a plurality of discontinuous frequency bands is explained. Constituent elements similar to those of the first embodiment described above are denoted by like reference numerals and explanations thereof are omitted.

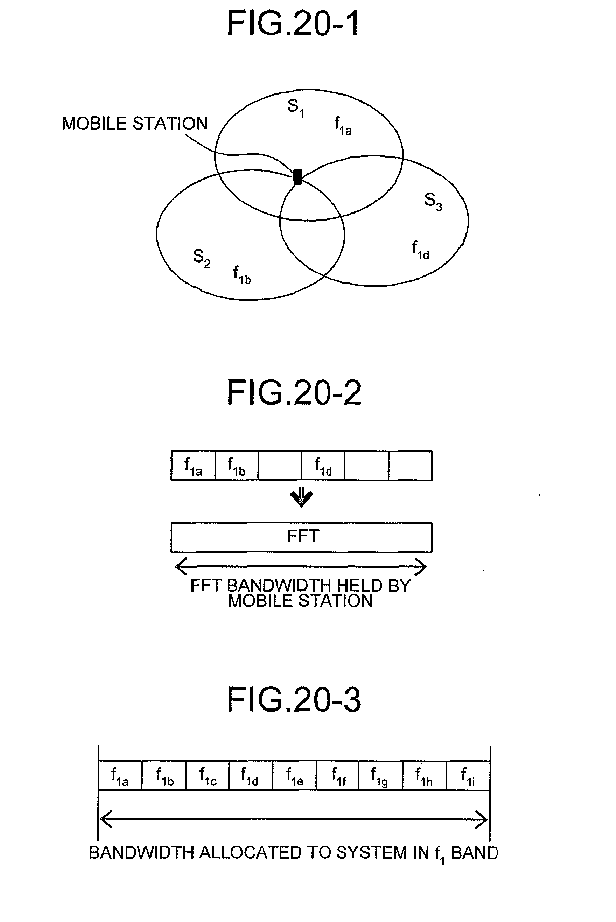

Figs. 20 (corresponding to Fig. 20-1, Fig. 20-2, Fig. 20-3) are specific examples of a frequency arrangement according to the fourteenth embodiment. Like in the thirteenth embodiment explained above, the low-frequency band f₁ needs to use different frequencies between adjacent cells. A mobile station corresponding to the high-frequency band f₂ includes an FFT corresponding to a broad band in the baseband. When the low-frequency band f₁ allocated to the system is to be used by being divided into parts as shown in Fig. 20-3, close frequency channels (f₁ₐ, f_{1b}, f_{1d}, in this example) are disposed between the adjacent cells as shown in Fig. 20-1. In Fig. 20-1, a mobile station present in the cell boundary receives waves from three stations. When the time is synchronized between the base stations, the FFT can demodulate signal of three stations at one time, as shown in Fig. 20-2. For example, as a frequency arrangement in the system, frequency channels within a frequency range smaller than a frequency bandwidth permitted in the high-frequency band are allocated.

As explained above, according to the present embodiment, a mobile station present in the cell boundary can simultaneously receive signals from a plurality of base stations. Accordingly, usable bands can be enlarged, and a seamless handover can be achieved.

### Fifteenth embodiment.

The operation according to a fifteenth embodiment is explained next. In the fifteenth embodiment, a multi-band radio communication method in a system that simultaneously provides a communication service using a plurality of discontinuous frequency bands is explained. Constituent elements similar to those of the first embodiment described above are denoted by like reference numerals and explanations thereof are omitted.

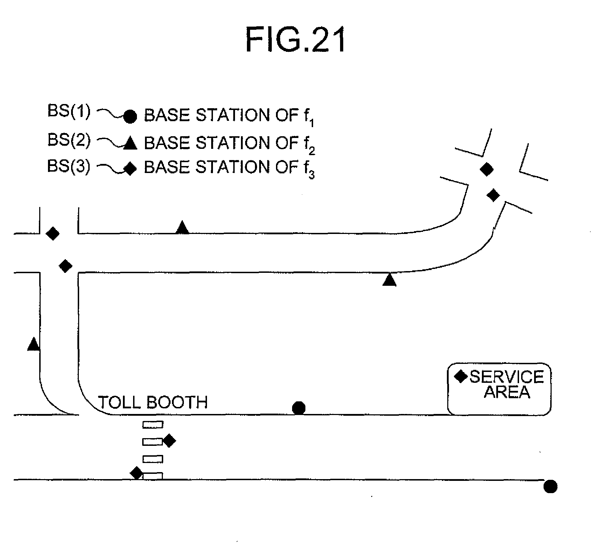

Fig. 21 is a specific example of a base station arrangement according to the fifteenth embodiment. In the present embodiment, the network configuration shown in Fig. 3 is used. For example, in a traffic system in which mobile stations move at a high speed, the system distributes information around the place in which a mobile station is moving, and provides the Internet service, movies and music for users and passengers. While automobiles are shown in Fig. 21, other high-speed moving means such as trains can be also applied.

For example, as shown in Fig. 21, base stations BSs (1) that use the low-frequency band f₁ are disposed around a highway, base stations BSs (3) that use the high-frequency band f₃ are disposed near traffic signals, toll booths of the highway, and in service areas, and base stations BSs (2) that use the intermediate frequency band f₂ are disposed around a general road. Generally, a base station that uses the frequency band f₁ having a narrow band and a low frequency has a wide service range, and a base station that uses the high-frequency band f₃ has a narrow service range. When a user stops at the crossing in the red signal or decelerates at a curve, or when a user stops the automobile at a toll booth or in a service area of the highway, the user communicates in a large capacity in a high-frequency band, thereby obtaining movies for the passengers and detailed information about the surrounding. During the running in the general road, a user can always check congestion information and information about shops around. During the running in the highway, the user can obtain traffic congestion information in the front using a low frequency band that can be corresponded to a high-speed moving.

As explained above, according to the present embodiment, in a high-speed moving environment, base stations that use a low frequency are disposed to suppress handover overhead. In a low-speed environment, base stations that use a high frequency in which broad communication is possible are disposed. With this arrangement, an efficient communication system can be constructed.

### Sixteenth embodiment.

The operation according to a sixteenth embodiment is explained next. In the sixteenth embodiment, a multi-band radio communication method in a system that simultaneously provides a communication service using a plurality of discontinuous frequency bands is explained. Constituent elements similar to those of the first embodiment described above are denoted by like reference numerals and explanations thereof are omitted.

The present embodiment relates to the use of a multicarrier CDMA (MC-Code Division Multiple Access) system in each frequency band, in multi-band radio communication.

At present, in the future-generation mobile communication system, a multicarrier CDMA system using the OFDM system and the CDMA system in combination is being actively studied. The multicarrier CDMA system performs a code spreading of signals in a time-frequency area using the OFDM transmission format. A plurality of signals can be multiply transmitted, using a plurality of orthogonal codes. This process is described in, for example, literature written by Y. Kishiyama, N. Maeda, K. Higuchi, H. Higuchi, M. Sawahashi, "Experiments on throughput performance above 100 Mbps in forward link for VSF-OFCDM broadband wireless access", Proc. of VTC2003 Fall, Sep. 2004.

According to the multicarrier CDMA system, spreading of the signals in a time-frequency area having the same phasing variation is important to keep orthogonality between multiplexed signals. In the time-frequency area having different phasing variations, orthogonality of the multiplexed signals collapse, and the signals interfere each other.

In the multi-band radio communication, Doppler frequency is greatly different in proportion to the used frequencies. For example, when the frequency bands of 800 megahertz and 3.5 gigahertz are used, Doppler frequency becomes large by about 4.38 times at the 3.5 gigahertz. Therefore, change of a propagation state in time is intense, and orthogonality collapses easily.

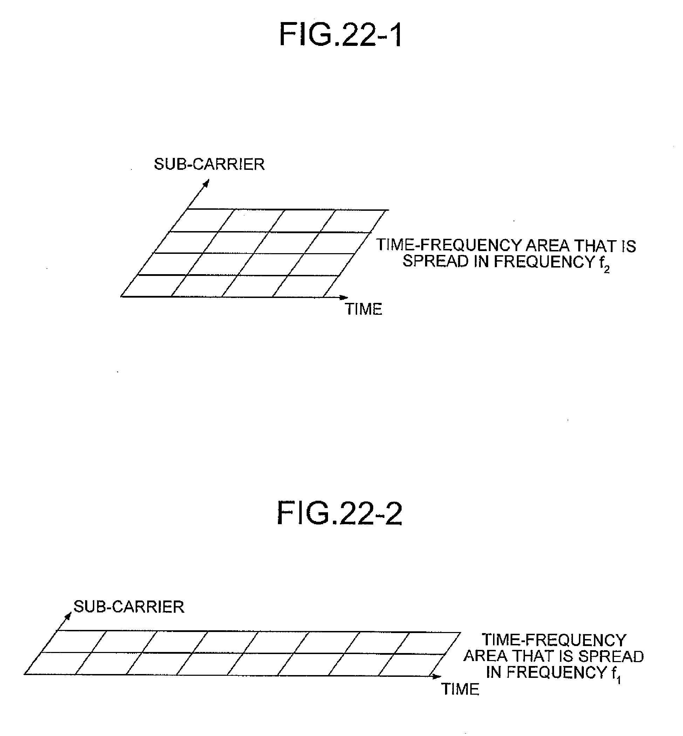

According to the present embodiment, as shown in Fig. 22 (Fig. 22-1 and Fig. 22-2), a multicarrier CDMA signal is spread, in different units of time-frequency areas, in different frequency bands. Specifically, in the low frequency, a signal is spread in a longer time, and in the high frequency, a signal is spread in a shorter time. As explained above, according to the present embodiment, the time-frequency area that is spread according to the frequency band of the multi-band radio communication is changed. Accordingly, orthogonality of the multicarrier CDMA signal can be held in each frequency.

### Seventeenth embodiment.

The operation according to a seventeenth embodiment is explained next. In the seventeenth embodiment, a multi-band radio communication method in a system that simultaneously provides a communication service using a plurality of discontinuous frequency bands is explained. Constituent elements similar to those of the embodiments described above are denoted by like reference numerals and explanations thereof are omitted.

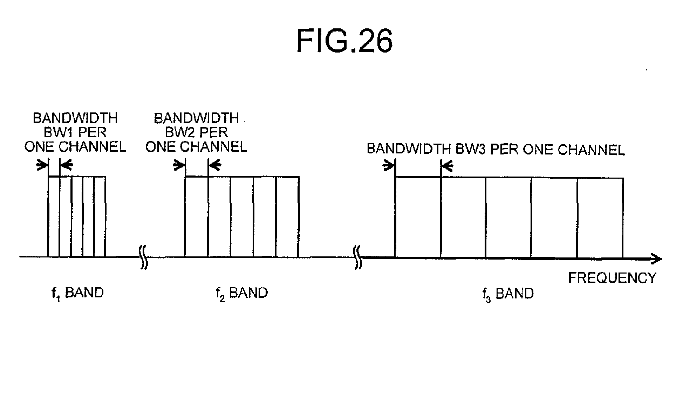

Fig. 26 depicts a bandwidth of each frequency band per one channel at the time of performing multi-band communication (BW1<BW2<BW3). Generally, in the high-frequency band in which a broad bandwidth can be secured, the bandwidth per one channel is increased, and in the low-frequency band in which a broad bandwidth cannot be secured easily, the bandwidth per one channel is decreased. With this arrangement, in the low-frequency band in which a service can be provided in a wide area, the band becomes small, but the number of accommodated channels increases. In the high-frequency band in which a broad band can be used, broadband communication can be achieved, and the frequency can be used efficiently.

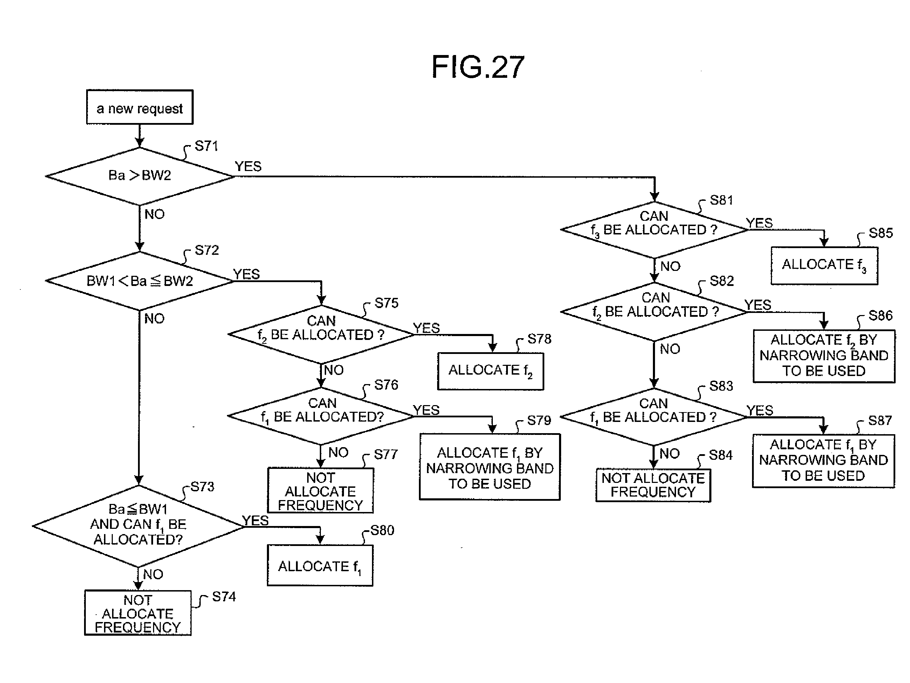

When a channel of each frequency band is determined as shown in Fig. 26, a band is allocated as shown in Fig. 27, for example.

First, a mobile station that is about to start new communication notifies the base station of a radio resource amount Ba that the mobile station requires. When Ba is larger than BW2 (step S71, Yes), the optimum frequency band is f₃, and therefore, the base station checks whether f₃ can be allocated to the communication (step S81). When f₃ can be allocated (step S81, Yes), the base station determines to use f₃ (step S85). On the other hand, when f₃ cannot be allocated (step S81, No), the base station checks, from a high-frequency band, whether f₂ and f₁ can be allocated (steps S82, S83). When a frequency band with a radio resource amount smaller than Ba is allocated, the mobile station performs the communication by narrowing the band to be used (steps S86, S87). When f₂ and f₁ cannot be allocated (step S82, No, and step S83, No), no frequency band is allocated (step S84).

When Ba is smaller than BW2 and is larger than BW1 (step S72, Yes), the optimum frequency band is f₂, and therefore, the base station checks, from f₂, whether a frequency band can be allocated (step S75). When the frequency band can be allocated (step S75, Yes), the base station determines to use f₂ (step S78). On the other hand, when the frequency band cannot be allocated (step S75, No), the base station checks whether f₁ can be allocated (step S76). When f₁ can be allocated, (step S76, Yes), the base station narrows the band to be used and allocates f₁ (step S79). On the other hand, when f₁ cannot be allocated (step S76, No), no frequency band is allocated (step S77). In this case, even when f₃ can be allocated, the band becomes idle, and therefore, allocation is not performed.

When Ba is BW1 or less, the base station checks only whether f₁ can be allocated (step S73). When the frequency band can be allocated (step S73, Yes), f₁ is allocated to be used (step S80). On the other hand, when f₁ cannot be allocated (step S73, No), no frequency band is allocated (step S74).

As explained above, according to the present embodiment, a narrow channel is used in a low-frequency band of a narrow band in a wide service area, and a wide channel is used in a high-frequency band having broad band in a narrow service area. With this arrangement, the number of accommodation can be increased in a wide range. As shown in Fig. 27, a frequency band is determined following a radio resource amount required by the radio station, and a band is allocated in only a frequency lower than the frequency band. Consequently, frequency utilization efficiency can be increased.

While the allocation system as shown in Fig. 27 is explained in the present embodiment, the allocation as shown in Fig. 6 is performed, and a band can be sequentially allocated starting from a high-frequency band, like in the first embodiment, even when the frequency is used in the manner as shown in Fig. 26. Further, a band necessary for a mobile station can be flexibly secured, and the number of accommodation can be increased, by combining controls of bundling a plurality of channels according to the frequency using state, when the system shown in Fig. 6 or the system shown in Fig. 27 is used.

While one example where a band becomes broader from a low frequency toward a high frequency has been explained above, the frequency band allocated to one system is not limited to the example. For instance, in the case of the band shown in Fig. 25-1, f₁ can be set to a narrowest channel, or f₂ can be set to a narrowest channel.

When communication is performed by changing and fixing the bandwidth per one channel for each frequency band, like in the present embodiment, for example, in the service of downloading a vide, when there is a large difference of information amount between uplink and downlink, such as when uplink is applied to only information to identify a desired video and when downlink is applied to data of a large video, a frequency band having a narrow band per one channel like f₁ can be set as an uplink exclusive channel having a small information amount, and a frequency band having a broad band per one channel like f₂ and f₃ can be set as a downlink exclusive channel, as shown in Fig. 26. As explained above, there is a difference in the information amount between uplink and downlink, according to the method of disposing uplink and downlink by dividing these links into separate frequency bands based on the information amount, a service is limited to the area where the total frequency bands can be used. However, this is an effective system having high utilization efficiency of frequencies within the area.

### INDUSTRIAL APPLICABILITY

As described above, the multi-band radio communication method according to the present invention is useful for a multi-band radio communication system for simultaneously providing communication services using a plurality of frequency bands, and is particularly suitable for preferentially allocating a high-frequency band to a mobile station.

## Claims

1. A multi-band radio communication method for a base station that allocates a frequency band to a mobile station which requests initiation of communication, the base station constituting a radio communication system that simultaneously provides communication services through a plurality of discontinuous frequency bands, the multi-band radio communication method comprising:
a control-information extracting step of extracting control information concerning a channel state in each of the frequency bands, and identifying a frequency band available for the mobile station based on a result of the extraction; and
an allocation determining step of determining whether each of the frequency bands can be allocated to new traffic corresponding to a request for initiation of communication in a predetermined order.

2. The multi-band radio communication method according to claim 1, wherein, at the allocation determining step, number of users who can be accommodated in each of the frequency bands is compared with number of users who are currently communicating, sequentially from a high frequency band, and when a user can be accommodated, the frequency band is allocated to the new traffic.

3. The multi-band radio communication method according to claim 1, wherein, at the allocation determining step, a radio resource amount that can be used in each of the frequency bands is compared with a total of a radio resource amount currently being used and a radio resource amount requested by the request for initiation of communication, sequentially from a high frequency band, and when there are sufficient radio resources, the frequency band is allocated to the new traffic.

4. The multi-band radio communication method according to claim 2 or 3, wherein, at the allocation determining step, at least one of a moving speed of the mobile station, an amount of interference in each of the frequency bands, field strength in each of the frequency bands, a delay spread in each of the frequency bands, and a signal-to-interference plus noise power ratio (SINR) in each of the frequency bands is used for determination.

5. The multi-band radio communication method according to claim 1, wherein, at the allocation determining step, a number of users who can be accommodated in each frequency band is compared with a number of users who are currently communicating, in the order of a low frequency band, and when the users can be accommodated, their frequency bands are allocated.

6. The multi-band radio communication method according to claim 1, wherein, at the allocation determining step, a radio resource amount that can be used in each frequency band is compared with a total of a radio resource amount currently being used and a radio resource amount requested by a new communication starting request, in the order of a low frequency band, and when the radio resource amount can be accommodated, their frequency bands are allocated.

7. The multi-band radio communication method according to claim 5 or 6, wherein, at the allocation determining step, at least one of a moving speed of a mobile station, interference amount in each frequency band, field strength in each frequency band, a delay spread in each frequency band, and a signal-to-interference plus noise power ratio (SINR) in each frequency band is used in the determination process.

8. The multi-band radio communication method according to claim 1, wherein, at the allocation determining step, a number of users who can be accommodated in each frequency band is compared with a number of users who are currently communicating, in the order of a broad band of each high frequency band allocated to the system, and when the users can be accommodated, their frequency bands are allocated.

9. The multi-band radio communication method according to claim 1, wherein, at the allocation determining step, a radio resource amount that can be used in each frequency band is compared with a total of a radio resource amount currently being used and a radio resource amount requested by a new communication starting request, in the order of a broad band of each high frequency band allocated to the system, and when the radio resource amount can be accommodated, their frequency bands are allocated.

10. The multi-band radio communication method according to claim 8 or 9, wherein, at the allocation determining step, at least one of a moving speed of a mobile station, interference amount in each frequency band, field strength in each frequency band, a delay spread in each frequency band, and a signal-to-interference plus noise power ratio (SINR) in each frequency band is used in the determination process.

11. The multi-band radio communication method according to claim 1, wherein, at the allocation determining step, a number of users who can be accommodated in each frequency band is compared with a number of users who are currently communicating, in the order of a narrow band of each high frequency band allocated to the system, and when the users can be accommodated, their frequency bands are allocated.

12. The multi-band radio communication method according to claim 1, wherein, at the allocation determining step, a radio resource amount that can be used in each frequency band is compared with a total of a radio resource amount currently being used and a radio resource amount requested by a new communication starting request, in the order of a narrow band of each high frequency band allocated to the system, and when the radio resource amount can be accommodated, their frequency bands are allocated.

13. The multi-band radio communication method according to claim 11 or 12, wherein, at the allocation determining step, at least one of a moving speed of a mobile station, interference amount in each frequency band, field strength in each frequency band, a delay spread in each frequency band, and a signal-to-interference plus noise power ratio (SINR) in each frequency band is used in the determination process.

14. The multi-band radio communication method according to claim 1, wherein the base station timely establishes synchronization of frame structures of signals transmitted in a plurality of frequency bands.

15. The multi-band radio communication method according to claim 14, wherein timing of notification information is synchronized as signals transmitted in a plurality of frequency bands.

16. The multi-band radio communication method according to claim 15, wherein, when signals transmitted in a plurality of frequency bands are signals of the OFDM communication system, timings of OFDM symbols transmitted in a plurality of frequency bands are matched together, and the signals are demodulated at the same FFT timing.

17. The multi-band radio communication method according to claim 15, wherein, when signals transmitted in a plurality of frequency bands are signals of single carriers, start time of transmitted information units are matched between a plurality of frequency bands.

18. The multi-band radio communication method according to any one of claims 15, 16, and 17 wherein the base station transmits the notification information, using one specific frequency band.

19. The multi-band radio communication method according to any one of claims 15, 16, and 17 wherein the base station transmits the notification information, using the lowest frequency band.

20. The multi-band radio communication method according to any one of claims 15, 16, and 17 wherein the base station transmits the notification information at the same timing in all frequency bands.

21. The multi-band radio communication method according to any one of claims 15, 16, and 17 wherein the base station transmits the notification information at different timings in all frequency bands.

22. A multi-band radio communication method for a base station that allocates a frequency band to a mobile station which requests initiation of communication, the base station constituting a radio communication system that simultaneously provides communication services through a plurality of discontinuous frequency bands, the multi-band radio communication method comprising:
a communication-starting request step at which the base station requests a communication starting in a specific frequency band;
a determining step at which the base station determines whether a new traffic can be accommodated in the specific frequency band, and when a new traffic can be accommodated in the specific frequency band, the base station allocates a channel to the mobile station;
a checking step at which a mobile station allocated with the channel checks a line state of frequency bands other than the specific frequency band; and
a shifting step at which the base station shifts the traffic of the mobile station to other frequency band based on a result of the check.

23. The multi-band radio communication method according to claim 22, wherein the mobile station requests a communication starting in a low frequency band as the specific frequency band, and, thereafter, notifies the base station that a high frequency band is a shifting destination from among usable frequency bands as a result of the checking.

24. The multi-band radio communication method according to claim 23, wherein the base station checks whether a new traffic can be accommodated in a frequency band notified as a result of the checking, and, when a new traffic can be accommodated in the frequency band, the base station shifts a traffic of the mobile station to the notified frequency band.

25. The multi-band radio communication method according to claim 22, wherein the mobile station requests a communication starting in a low frequency band as the specific frequency band, and, thereafter, notifies the base station about a required bandwidth of the move destination and a line state of each frequency band as a result of the checking.

26. The multi-band radio communication method according to claim 25, wherein the base station determines whether a new traffic can be accommodated with priority starting from a high frequency, based on a notified required bandwidth of the move destination and a line state of each frequency band, and when a new traffic can be accommodated, the base station shifts the traffic of the mobile station to a high frequency band in which the traffic can be accommodated.

27. The multi-band radio communication method according to any one of claims 22 to 26, wherein, upon determining a shifting at the shifting step, the base station further uses at least one of a moving speed of a mobile station, interference amount in each frequency band, field strength in each frequency band, a delay spread in each frequency band, and a signal-to-interference plus noise power ratio (SINR) in each frequency band.

28. A multi-band radio communication method for a base station that allocates a frequency band to a mobile station which requests initiation of communication, the base station constituting a radio communication system that simultaneously provides communication services through a plurality of discontinuous frequency bands, wherein
the base station transmits an incoming-call notification, using a specific frequency band.

29. A multi-band radio communication method for a base station that allocates a frequency band to a mobile station which requests initiation of communication, the base station constituting a radio communication system that simultaneously provides communication services through a plurality of discontinuous frequency bands, wherein
the base station transmits a control signal containing a usable frequency band, using a specific frequency band.

30. A multi-band radio communication method for a base station that allocates a frequency band to a mobile station which requests initiation of communication, the base station constituting a radio communication system that simultaneously provides communication services through a plurality of discontinuous frequency bands, wherein
the base station transmits a control signal containing a usable frequency band, using a lowest frequency band.

31. A multi-band radio communication method for a base station that allocates a frequency band to a mobile station which requests initiation of communication, the base station constituting a radio communication system that simultaneously provides communication services through a plurality of discontinuous frequency bands, the multi-band radio communication method comprising:
a communication-starting request step at which the mobile station transmits an identifier indicating a corresponding model of an own station, simultaneously with a communication starting request; and
a frequency determining step at which the base station recognizes frequency bands that the mobile station can be compatible based on a received identifier, determines a usable frequency band from among the compatible frequency bands, and notifies the mobile station of the usable frequency.

32. The multi-band radio communication method according to claim 29 or 30, wherein, when a specific operation frequency band is changed or stopped, in the process of determining the usable frequency band, the base station has a function of not allocating the specific frequency band to the mobile station.

33. The multi-band radio communication method according to claim 1, wherein a plurality of high-frequency band cells are disposed within one cell of a low-frequency band, using a fact that a radius of the cell in a high-frequency band is smaller than a radius of the cell in a low-frequency band, and reusing a high-frequency band.

34. The multi-band radio communication method according to claim 1, wherein frequency bands having a frequency range smaller than a maximum bandwidth that can be simultaneously used in the high-frequency band are disposed as adjacent cells of a low-frequency band.

35. The multi-band radio communication method according to claim 1, wherein a base station that uses a low-frequency band is disposed in a place where a high-speed move is forecast, and a base station that uses a high-frequency band is disposed in a place where a low-speed move is forecast.

36. The multi-band radio communication method according to claim 1, wherein, when communication is performed using a multicarrier CDMA system, a spreading process is performed in a unit of time frequency areas that are different according to frequency bands used.

37. A multi-band radio communication method for a base station that allocates a frequency band to a mobile station which requests initiation of communication, the base station constituting a radio communication system that simultaneously provides communication services through a plurality of discontinuous frequency bands in which a bandwidth of each frequency band per one channel is set large when a frequency band is broad, and a bandwidth of each frequency band per one channel is set small when a frequency band is narrow, the multi-band radio communication method comprising:
an optimum-frequency-band searching step at which a mobile station searches a frequency band using, as one channel, a band equal to or larger than a radio resource amount required by the radio station and closest to the required radio resource amount; and
an allocation determining step of determining whether a new traffic corresponding to the communication starting request can be allocated in the order of a high frequency band of frequencies from the frequency band obtained as a result of the searching.

38. The multi-band radio communication method according to claim 37, wherein, when there is a large difference of communication data amount between uplink and downlink, a frequency band having the narrowest band per one channel is set as an uplink exclusive channel having a small data amount, and a frequency band having a broad band per one channel is set as a downlink exclusive channel having a large data amount.

39. A base station that allocates a frequency band to a mobile station which requests initiation of communication in a radio communication system simultaneously providing communication services through a plurality of discontinuous frequency bands, the base station comprising:
a demodulator that extracts control information concerning a channel state in each of the frequency bands, and recognizes a frequency band that a mobile station can receive from a result of the extraction; and
a channel controller that determines, sequentially from a high frequency band, whether a new traffic responding to the request for communication starting can be allocated, in the frequency band in which the mobile station can receive information.

40. The base station according to claim 39, wherein the channel controller compares, sequentially from a high frequency band, number of users who can be accommodated in each of the frequency bands with number of users who are currently communicating and when a user can be accommodated, the frequency band is allocated to the new traffic.

41. The base station according to claim 39, wherein the channel controller compares, sequentially from a high frequency band, a radio resource amount that can be used in each of the frequency bands with a total of a radio resource amount currently being used and a radio resource amount requested by the request for initiation of communication, and, when there are sufficient radio resources, the frequency band is allocated to the new traffic.

42. The base station according to claim 40 or 41, wherein, the channel controller makes the determination based on at least one of a moving speed of the mobile station, an amount of interference in each of the frequency bands, field strength in each of the frequency bands, a delay spread in each of the frequency bands, and a signal-to-interference plus noise power ratio (SINR) in each of the frequency bands.
